(19) **Europäisches Patentamt**
**European Patent Office**
**Office européen des brevets**

(11) **EP 2 906 872 B1**

(12) **FASCICULE DE BREVET EUROPEEN**

(45) Date de publication et mention
de la délivrance du brevet:
**05.10.2016 Bulletin 2016/40**

(51) Int Cl.:
***F21V 8/00*** *(2006.01)*     ***G02B 6/00*** *(2006.01)*

(21) Numéro de dépôt: **13745427.8**

(86) Numéro de dépôt international:
**PCT/EP2013/066499**

(22) Date de dépôt: **06.08.2013**

(87) Numéro de publication internationale:
**WO 2014/056649 (17.04.2014 Gazette 2014/16)**

(54) **ENSEMBLE D'AFFICHAGE D'INFORMATIONS COMPRENANT UN DISPOSITIF D'AFFICHAGE D'INFORMATIONS ECLAIRE AU MOYEN D'UN GUIDE DE LUMIERE**

INFORMATIONSANZEIGEANORDNUNG MIT EINER INFORMATIONSANZEIGEVORRICHTUNG MIT BELEUCHTUNG DURCH EINEN LICHTWELLENLEITER

INFORMATION DISPLAY ASSEMBLY INCLUDING AN INFORMATION DISPLAY DEVICE ILLUMINATED BY MEANS OF A LIGHT GUIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2012 EP 12188107**

(43) Date de publication de la demande:
**19.08.2015 Bulletin 2015/34**

(73) Titulaire: **The Swatch Group Research and Development Ltd.**
**2074 Marin (CH)**

(72) Inventeur: **TORTORA, Pierpasquale**
**CH-2000 Neuchâtel (CH)**

(74) Mandataire: **Supper, Marc**
**ICB**
**Ingénieurs Conseils en Brevets**
**Fbg de l'Hôpital 3**
**2001 Neuchâtel (CH)**

(56) Documents cités:
**WO-A1-2011/100277     WO-A2-2008/045200**

**Description**

La présente invention concerne un guide de lumière optiquement isolé au moyen d'une couche poreuse. Plus précisément, la présente invention concerne l'intégration dans un dispositif de guidage de la lumière d'une couche poreuse permettant le collage de films optiques sans modification des propriétés optiques de propagation de la lumière dans le dispositif de guidage de la lumière.

Depuis quelques décennies déjà, les couches poreuses, aussi bien organiques qu'inorganiques, trouvent des applications dans des domaines aussi variés que les dispositifs biochimiques, électroniques, optiques ou encore photoniques. L'atout majeur des couches poreuses est de présenter un indice de réfraction généralement faible et modulable. Une telle caractéristique est très intéressante en particulier dans le domaine de l'optique. En effet, la majorité des matériaux utilisés dans les dispositifs optiques sont des matériaux de type diélectrique qui présentent des indices de réfraction élevés, typiquement supérieurs à 1,3. Or, la valeur de l'indice de réfraction conditionne tous les phénomènes optiques tels que la réflexion à l'interface entre deux matériaux de natures différentes ou bien encore le transport d'un flux lumineux dans un guide de lumière.

Très succinctement résumé, une couche poreuse est obtenue à partir d'un volume de matériau diélectrique d'indice de réfraction N à l'intérieur duquel sont créées des cavités de dimensions nanométriques de façon à obtenir une structure alvéolaire. Ces cavités sont remplies d'air qui possède un indice de réfraction n=1. Si la dimension des cavités est inférieure à la longueur d'onde de la lumière qui traverse le matériau poreux, alors ce matériau poreux se comportera vis-à-vis de cette lumière comme un milieu d'indice de réfraction moyen N1 compris entre l'indice de réfraction n de l'air et l'indice de réfraction N du matériau diélectrique. Ainsi, dans un volume de matériau poreux d'échelle comparable à la longueur d'onde de la lumière, l'indice de réfraction optique dépendra des taux d'occupation respectifs de l'air et du matériau diélectrique de façon que n<N1<N. On comprend donc qu'en agissant sur le taux d'occupation des cavités nanométriques, autrement dit en agissant sur la densité ou la taille de ces cavités par unité de volume du matériau diélectrique, ou bien en agissant sur l'indice de réfraction du gaz avec lequel sont remplies les cavités nanométriques, on peut obtenir pour le matériau poreux un continuum de valeurs d'indice de réfraction. Par mise en oeuvre de cette technique, il est ainsi possible de créer par structuration de la matière de nouveaux matériaux pour l'optique que l'on ne trouve pas dans la nature. Les méthodes de fabrication actuelles permettent par exemple de déposer des matériaux poreux en couches minces sur un substrat. En ajustant les indices de réfraction de plusieurs couches superposées, on peut entre autres réaliser des couches antireflets très performantes.

La présente invention s'intéresse à l'application des couches poreuses brièvement décrites ci-dessus dans le domaine des guides de lumière utilisés pour l'éclairage d'un dispositif d'affichage tel qu'une cellule d'affichage à cristaux liquides.

Dans sa forme la plus simple, un dispositif de rétroéclairage, encore connu sous sa dénomination anglo-saxonne « backlight », se compose d'une ou de plusieurs sources de lumière qui injectent de la lumière dans un guide transparent sur la surface duquel sont structurés des extracteurs de lumière tels que des prismes ou des lentilles. Un tel dispositif de rétroéclairage a pour but d'éclairer un dispositif d'affichage d'informations par le dessous de manière aussi homogène que possible. Un film réfléchissant disposé sous le dispositif de rétroéclairage et un film diffusant disposé au-dessus du dispositif de rétroéclairage complètent l'ensemble. La lumière à l'intérieur du guide se propage par réflexion totale sur les parois intérieures du guide. L'angle de réflexion totale maximum est l'angle limite, par rapport à la normale aux surfaces du guide, au-delà duquel un rayon lumineux sort du guide. Pour un guide de lumière entouré d'air, l'angle de réflexion totale maximum est donné par la formule ci-dessous :

$$\theta_{\lim} = \arcsin \frac{n}{N} \qquad (1)$$

où n=1 est l'indice de réfraction de l'air et N est l'indice de réfraction du guide de lumière.

Pour pouvoir garantir le mécanisme de guidage de la lumière dans un dispositif de rétroéclairage, il faut toujours laisser une couche d'air entre le film réfléchissant et le guide de lumière d'une part, et entre le guide de lumière et le film diffusant d'autre part. On ne peut donc pas envisager de coller les films sur le guide. En effet, dans le cas où l'on collerait les films réfléchissant et diffusant sur le guide, la lumière serait expulsée du guide et serait, selon la nature du film, diffusée ou absorbée, ce qui induirait des pertes dans le flux lumineux. Contrairement aux pertes induites par les extracteurs de lumière, les pertes induites par les films collés sur le guide de lumière ne sont pas contrôlables quantitativement, et donc l'uniformité de l'éclairage en serait affectée.

Pour les raisons que l'on vient de décrire, la plupart des dispositifs de rétroéclairage ne sont donc pas fixés directement au dispositif d'affichage d'informations, une couche d'air séparant le dispositif de rétroéclairage du dispositif d'affichage d'informations. En outre, différents films peuvent être disposés entre le dispositif d'affichage d'informations et le dispositif de rétroéclairage. A titre d'exemple, dans l'ordre d'empilement du dispositif de rétroéclairage et du dispositif d'affichage d'informations, un film réfléchissant peut être prévu sous le dispositif de rétroéclairage, séparé de ce dernier par une couche d'air. De même, un film diffusant peut être disposé entre le dispositif de rétroéclairage et le dispositif d'affichage d'informations, le film diffusant étant entouré par l'air. On obtient donc un ensemble encombrant formé d'une multiplicité de pièces qu'il est notamment difficile d'intégrer dans une chaîne de fabrication industrielle automatisée. En outre, si l'ensemble d'affichage d'informations formé par le dispositif d'affichage d'informations et le dispositif de rétroéclairage est logé par exemple dans un boîtier, les modifications apportées à ce boîtier peuvent nécessiter de retoucher le moule d'injection du dispositif de rétroéclairage, voire de devoir réaliser un nouveau moule, ce qui est coûteux. Ceci est particulièrement vrai dans le cas où le dispositif d'affichage d'informations suit un profil courbe. Effectivement, si le dispositif d'affichage d'informations est logé dans un boîtier de volume restreint, il peut être difficile, sauf à devoir respecter des tolérances élevées, d'assurer une couche d'air suffisante sur toute la surface du dispositif d'affichage d'informations à illuminer. On peut donc souhaiter, notamment pour des raisons économiques, réduire ces contraintes, mais ceci implique alors une augmentation de l'encombrement du boîtier.

La présente invention a pour but de remédier aux inconvénients mentionnés ci-dessus ainsi qu'à d'autres encore en procurant un dispositif d'affichage d'informations éclairé par un guide de lumière, le dispositif d'affichage d'informations formant avec le guide de lumière un ensemble monobloc moins encombrant et donc plus facile à loger par exemple dans un boîtier.

A cet effet, selon une première variante de réalisation, la présente invention concerne un ensemble d'affichage d'informations comprenant un dispositif d'affichage d'informations de type transmissif et un guide de lumière dans lequel est injectée de la lumière, le guide de lumière, disposé sous le dispositif d'affichage d'informations par rapport à un observateur, présentant une surface supérieure en regard du dispositif d'affichage d'informations et une surface inférieure opposée à la surface supérieure, des extracteurs de lumière, structurés dans la surface supérieure du guide de lumière, permettant d'extraire une partie de la lumière injectée dans le guide de lumière et de la diriger en direction du dispositif d'affichage d'informations pour éclairer ce dernier, une première couche poreuse étant déposée sur la surface supérieure dans laquelle sont structurés les extracteurs de lumière.

Selon une seconde variante de réalisation de l'invention, l'ensemble d'affichage d'informations comprend un dispositif d'affichage d'informations de type transmissif et un guide de lumière dans lequel est injectée de la lumière, le guide de lumière, disposé sous le dispositif d'affichage d'informations par rapport à un observateur, présentant une surface supérieure en regard du dispositif d'affichage d'informations et une surface inférieure opposée à la surface supérieure, des extracteurs de lumière, structurés dans la surface inférieure du guide de lumière, permettant d'extraire une partie de la lumière injectée dans le guide de lumière et de la diriger en direction du dispositif d'affichage d'informations pour éclairer ce dernier, une première couche poreuse étant déposée sur la surface inférieure dans laquelle sont structurés les extracteurs de lumière.

Grâce à ces caractéristiques, la présente invention procure un ensemble d'affichage d'informations monobloc qu'il est plus facile de manipuler et d'insérer dans une chaîne de fabrication industrielle automatisée que des éléments séparés. D'autre part, l'ensemble d'affichage d'informations monobloc est plus facile à loger par exemple dans un boîtier et ne nécessite pas nécessairement d'être repris en cas de modification du boîtier. Ce résultat est atteint grâce au fait que l'on enseigne de remplacer la couche d'air qui habituellement isole le guide de lumière par rapport au dispositif d'affichage d'informations par une mince couche poreuse qui sert d'isolant optique et qui est en contact direct avec la surface supérieure ou inférieure du guide de lumière dans laquelle sont structurés les extracteurs de lumières. Les extracteurs de lumière, recouverts par la couche poreuse, voient leur efficacité d'extraction diminuer légèrement en raison d'une différence plus faible entre l'indice de réfraction de la matière du guide et l'indice de réfraction de la couche poreuse. Cette baisse d'efficacité peut toutefois être évaluée et être prise en compte lors de la conception du système et de la détermination de son bilan énergétique. Pour pallier la diminution d'efficacité, on peut en particulier agir sur la géométrie des extracteurs. En outre, la baisse d'efficacité peut, dans certains cas, être naturellement compensée par un meilleur flux de lumière à travers la structure lorsqu'on assemble un dispositif monobloc. En effet, dans les systèmes de l'art antérieur, la présence des couches d'air augmente fortement les réflexions multiples qui se produisent lorsque la lumière se propage aux interfaces entre l'air et le guide de lumière. Pour remédier à ce problème, on est souvent obligé d'avoir recours à des films par exemple prismatiques afin de pouvoir recycler la lumière réfléchie aux diverses interfaces. L'indice de réfraction de la couche poreuse, bien que supérieur à l'indice de réfraction de l'air, est très sensiblement inférieur aux indices de réfraction des matériaux que l'on trouve dans la nature et qui ne sont jamais inférieurs à 1.3. Par conséquent, le fait d'isoler le guide de lumière au moyen d'une couche poreuse ne modifie que peu les caractéristiques de propagation de la lumière dans le guide de lumière. Tout au plus, l'ouverture numérique du guide de lumière devient plus petite, de sorte que la propagation de la lumière se fait selon des angles plus rasants. Si l'on peut supporter que moins de lumière puisse être injectée dans le guide de lumière, alors on peut utiliser la couche poreuse comme interface permettant de fixer mécaniquement le guide de lumière sur le dispositif d'affichage d'informations au moyen d'une couche adhésive quelconque. On obtient alors un ensemble d'affichage d'informations monobloc que l'on peut aisément manipuler et insérer dans une ligne de fabrication industrielle automatisée. Par ailleurs, une modification du boîtier dans lequel l'ensemble d'affichage d'informations monobloc est par exemple logé ne nécessite pas de devoir retoucher, voire repenser le moule d'injection du guide de lumière.

Une fois isolé optiquement, le guide de lumière peut être fixé mécaniquement au dispositif d'affichage d'informations soit directement, soit avec interposition entre la couche poreuse et le dispositif d'affichage d'informations d'une couche adhésive transparente, sans que cela n'induise de perte de lumière. On peut donc envisager que le guide de lumière, revêtu de sa couche poreuse et, le cas échéant, de films additionnels tels qu'un film diffusant et/ou un film réfléchissant, soit fixé directement au dispositif d'affichage d'informations par des procédés physiques ou chimiques de fusion, sans utilisation de couche adhésive. Une telle possibilité est uniquement conditionnée par la nature des matériaux qui composent les différentes couches du système d'affichage et leur compatibilité avec les procédés physiques ou chimiques de fusion. De même, on peut s'affranchir de la couche adhésive dans le cas où le guide de lumière et ses différentes couches sont pressés contre le dispositif d'affichage d'informations au moyen d'un système de tenue mécanique, sans laisser subsister de couche d'air entre les différentes couches du système d'affichage. Une autre possibilité encore de s'affranchir de la couche de colle consiste à créer le vide entre les différentes couches du système d'affichage.

Selon une caractéristique complémentaire de l'invention, l'épaisseur de la couche poreuse est inférieure ou égale à six micromètres.

Comme le dispositif d'affichage d'informations est de type transmissif, le guide de lumière, revêtu de sa couche poreuse, est disposé sous le dispositif d'affichage d'informations par rapport à un observateur, dans le sens d'empilement du guide de lumière et du dispositif d'affichage d'informations, avec interposition d'une couche adhésive entre la couche poreuse et le dispositif d'affichage d'informations. Afin d'éviter toute altération de l'aspect esthétique du système d'affichage, la couche adhésive peut être choisie de couleur neutre et transparente comme un film optique adhésif encore connu sous sa dénomination anglo-saxonne Optical Clear Adhesive ou OCA ou bien une colle transparente photo- ou thermopolymérisable.

Pour améliorer les qualités de l'éclairage, on peut prévoir un film réfléchissant sous le guide de lumière et un film diffusant au-dessus du guide de lumière. Le guide de lumière étant revêtu sur ses faces inférieure et supérieure d'une couche poreuse, le film réfléchissant et le film diffusant sont fixés respectivement sous la face inférieure du guide de lumière et sur la face supérieure du guide de lumière au moyen d'une couche adhésive, le dispositif d'affichage d'informations étant fixé sur le guide de lumière via le film diffusant au moyen d'une troisième couche adhésive.

D'autres caractéristiques et avantages de la présente invention ressortiront plus clairement de la description détaillée qui suit d'un mode de réalisation de l'ensemble d'affichage selon l'invention, cet exemple étant donné à titre purement illustratif et non limitatif seulement en liaison avec le dessin annexé sur lequel :

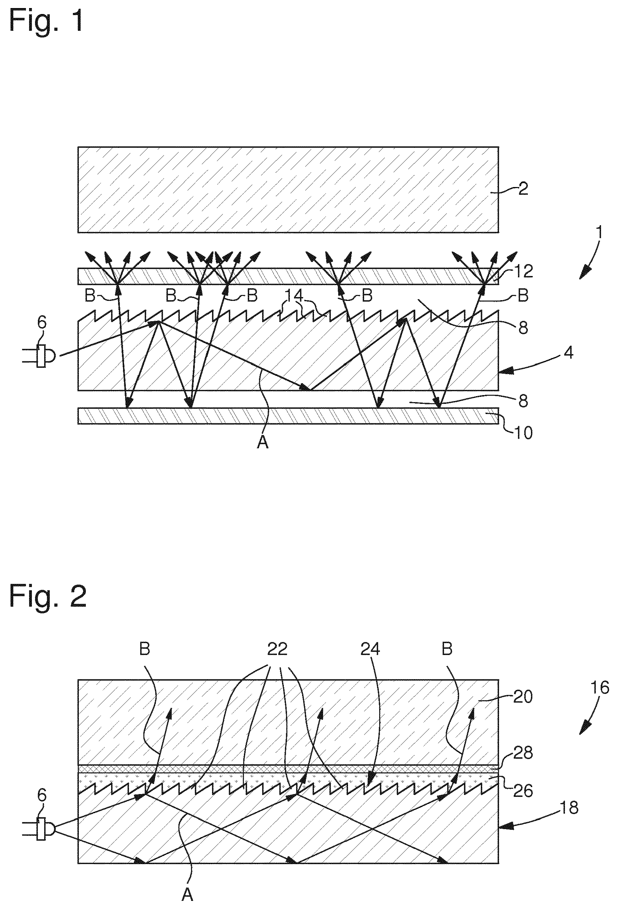

- la figure 1 est une vue schématique d'un ensemble d'affichage d'informations selon l'art antérieur, cet ensemble d'affichage d'informations comprenant un dispositif de rétroéclairage disposé sous un dispositif d'affichage d'informations de type transmissif, le dispositif de rétroéclairage étant placé dans l'air, un film réfléchissant étant disposé sous le dispositif de rétroéclairage et un film diffusant étant disposé entre le dispositif de rétroéclairage et le dispositif d'affichage d'informations ;

- la figure 2 est une vue schématique d'un ensemble d'affichage d'informations selon l'invention, cet ensemble d'affichage comprenant un dispositif de rétroéclairage disposé sous un dispositif d'affichage d'informations de type transmissif, le dispositif de rétroéclairage, isolé optiquement à l'aide d'une première couche poreuse déposée sur la surface supérieure du dispositif d'affichage d'informations dans laquelle sont structurés les extracteurs de lumière, étant fixé directement au dispositif d'affichage d'informations au moyen d'une couche adhésive qui joue le rôle d'interface mécanique ;

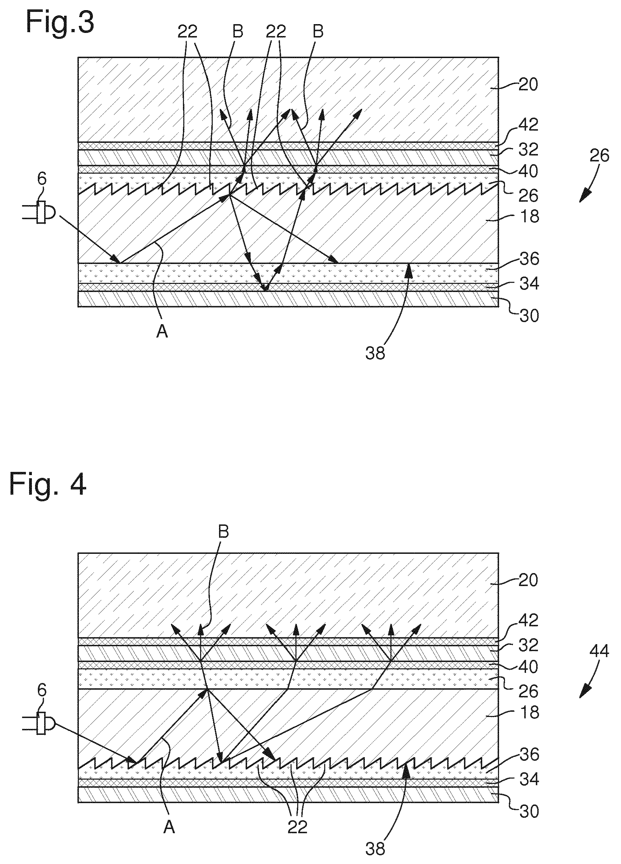

- la figure 3 est une vue analogue à celle de la figure 2, le dispositif de rétroéclairage, optiquement isolé des deux côtés au moyen d'une première et d'une seconde couches poreuses, étant revêtu d'un film réfléchissant sur sa face inférieure et d'un film diffusant sur sa face supérieure, avec interposition d'une couche adhésive, et

- la figure 4 est une vue schématique d'un ensemble d'affichage d'informations selon l'invention, cet ensemble d'affichage comprenant un dispositif de rétroéclairage disposé sous un dispositif d'affichage d'informations de type transmissif, le dispositif de rétroéclairage, isolé optiquement à l'aide d'une première couche poreuse déposée sur la surface inférieure du dispositif d'affichage d'informations dans laquelle sont structurés les extracteurs de lumière, et d'une seconde couche poreuse déposée sur la surface supérieure, étant revêtu d'un film réfléchissant et d'un film diffusant, avec interposition d'une couche adhésive.

La présente invention procède de l'idée générale inventive qui consiste à fixer directement un guide de lumière à un dispositif d'affichage d'informations. Le guide de lumière, optiquement isolé au moyen d'une couche poreuse déposée sur celle de ses surfaces supérieure ou inférieure dans laquelle sont structurés des extracteurs de lumière, est fixé au dispositif d'affichage d'informations par l'intermédiaire d'une couche adhésive. Grâce à ces caractéristiques, on procure un ensemble d'affichage d'informations dans lequel le guide de lumière peut être optiquement isolé indépendamment du positionnement des extracteurs de lumière. On s'est en effet rendu compte que la première couche poreuse peut être déposée sur la surface du guide de lumière dans laquelle sont structurés les extracteurs de lumière, sans que la présence de la couche poreuse ne nuise beaucoup à l'efficacité d'extraction de la lumière des extracteurs. Les extracteurs de lumière, recouverts par la couche poreuse, voient en effet leur efficacité d'extraction diminuer légèrement en raison d'une différence plus faible entre l'indice de réfraction de la matière du guide et l'indice de réfraction de la couche poreuse. Cette baisse d'efficacité peut toutefois être évaluée et être prise en compte lors de la conception du système et de la détermination de son bilan énergétique. Pour pallier la diminution d'efficacité, on peut en particulier agir sur la géométrie des extracteurs. En outre, la baisse d'efficacité peut, dans certains cas, être naturellement compensée par un meilleur flux de lumière à travers la structure lorsqu'on assemble un dispositif monobloc. En effet, dans les systèmes de l'art antérieur, la présence des couches d'air augmente fortement les réflexions multiples qui se produisent lorsque la lumière se propage aux interfaces entre l'air et le guide de lumière. Pour remédier à ce problème, on est souvent obligé d'avoir recours à des films par exemple prismatiques afin de pouvoir recycler la lumière réfléchie aux diverses interfaces. Par conséquent, il est possible de déposer une couche poreuse sans que l'on soit obligé de tenir compte de la présence des extracteurs de lumière, ce qui offre une grande flexibilité dans la conception de l'ensemble d'affichage d'informations selon l'invention. Par ailleurs, l'ensemble d'affichage monobloc résultant est moins encombrant et plus facile à intégrer dans une chaîne de fabrication industrielle automatisée. En outre, dans le cas où l'ensemble d'affichage monobloc est par exemple logé dans un boîtier, le plus souvent il ne sera pas nécessaire de retoucher le moule d'injection du guide de lumière dans le cas où le boîtier est modifié.

Dans l'art antérieur, le guide de lumière est séparé du dispositif d'affichage d'informations par une couche d'air. Pour un guide de lumière entouré d'air, l'angle de réflexion totale maximum est donné par la formule ci-dessous :

$$\theta_{\lim} = \arcsin \frac{n}{N} \qquad (1)$$

où n=1 est l'indice de réfraction de l'air et N est l'indice de réfraction du guide de lumière. L'angle de réflexion totale maximum est l'angle limite, par rapport à la normale aux faces du guide de lumière, au-delà duquel un rayon lumineux sort du guide. Dans un guide de lumière entouré d'air, une partie du flux lumineux subit des réflexions totales dans le guide, tandis qu'une autre partie du flux lumineux est extraite du guide par les extracteurs et est dirigée vers le dispositif d'affichage d'informations pour éclairer ce dernier. L'avantage de la couche d'air est qu'elle ne perturbe pas la propagation du flux lumineux dans le guide de lumière. Cependant, la couche d'air ne procure pas d'interface mécanique permettant de fixer le guide de lumière au dispositif d'affichage d'informations. On a donc affaire à un ensemble d'affichage d'informations constitué d'éléments séparés qu'il est difficile d'intégrer dans une chaîne de fabrication industrielle automatisée. En outre, un tel ensemble d'affichage d'informations est volumineux et il peut être nécessaire de retoucher le moule d'injection du guide de lumière, voire de devoir en réaliser un nouveau dans le cas où le boîtier dans lequel le guide de lumière est par exemple logé est modifié. Pour résoudre ce problème, on pourrait envisager de fixer directement le guide de lumière contre le dispositif d'affichage d'informations au moyen d'une couche adhésive. Malheureusement, une telle solution perturbe gravement la propagation du flux lumineux à l'intérieur du guide de lumière. En effet, tandis qu'une partie de la lumière est classiquement extraite du guide de lumière par les extracteurs et vient éclairer le dispositif d'affichage d'informations de manière homogène, une partie importante du flux lumineux sort directement du guide de lumière pour venir éclairer le dispositif d'affichage d'informations, créant des phénomènes de halo lumineux et provoquant une dégradation de l'uniformité de l'éclairage. Il fallait donc trouver un matériau dont l'indice de réfraction, bien que supérieur à l'indice de réfraction de l'air, soit aussi proche que possible de cet indice de réfraction. Or, dans la nature, les matériaux connus possèdent un indice de réfraction au minimum égal à 1.3. Par conséquent, pour un matériau d'indice de réfraction N1 donné supérieur ou égal à 1.3, l'angle de réfraction totale maximum est donné par la relation suivante :

$$\theta_{\lim}^1 = \arcsin \frac{N1}{N} \qquad (2)$$

Comme l'indice de réfraction N1 est supérieur à l'indice de réfraction n=1 de l'air, l'angle de réfraction totale maximum $\theta_{\lim}^1$ augmente et une quantité plus importante de lumière s'échappe directement du guide de lumière. Au contraire, les matériaux poreux qui sont des matériaux que l'on ne trouve pas dans la nature ont des indices de réfraction inférieurs aux indices de réfraction les plus faibles des matériaux naturels. Par conséquent, les couches poreuses offrent un compromis intéressant par rapport à l'air. En effet, comparé au cas où le guide de lumière est entouré d'air, l'utilisation d'une couche de matériau poreux induit une augmentation de l'angle limite, de sorte que la propagation de la lumière à l'intérieur du guide se fait selon des angles plus rasants. Autrement dit, l'ouverture numérique du guide de lumière devient plus petite, de sorte que, pour une source de lumière donnée, il y a moins de lumière qui peut être injectée dans le guide. Toutefois, si l'on est prêt à accepter les légères pertes de flux lumineux qu'induit l'utilisation d'une couche poreuse, on peut alors profiter de l'interface mécanique que procure une telle couche poreuse pour assembler le guide de lumière avec le dispositif d'affichage d'informations. On obtient de la sorte un ensemble d'affichage d'informations monobloc qui est moins volumineux et qu'il est plus aisé à intégrer dans une ligne de production industrielle automatisée. En outre, dans le cas où l'ensemble d'affichage d'informations est logé par exemple dans un boîtier, si ce boîtier subit des modifications, il ne sera le plus souvent pas nécessaire de retoucher le moule d'injection du guide de lumière, voire de devoir en réaliser un nouveau dans le cas le plus défavorable.

La présente invention va être décrite en liaison avec un dispositif d'affichage d'informations de type transmissif. Il peut s'agir de tout type de dispositif d'affichage d'informations transmissif tel qu'un dispositif d'affichage à cristal liquide ou bien les dispositifs d'affichage à encre électronique ou encore les dispositifs d'affichage connus sous leur dénomination anglo-saxonne « electrowetting ». Le guide de lumière est constitué par un dispositif de rétroéclairage encore connu sous sa dénomination anglo-saxonne « back light ».

On notera par ailleurs que la présente invention va être décrite en liaison avec une couche adhésive utilisée pour fixer le guide de lumière contre le dispositif d'affichage d'informations. Il va cependant de soi que cet exemple est donné à titre purement illustratif et non limitatif seulement et que le dispositif d'affichage d'informations et le guide de lumière peuvent être fixés l'un à l'autre par d'autres techniques telles que les procédés physiques ou chimiques de fusion, des moyens de tenue mécaniques ou bien encore par création d'un vide comme déjà mentionné ci-dessus.

La figure 1 est une représentation schématique d'un ensemble d'affichage d'informations selon l'art antérieur. Désigné dans son ensemble par la référence numérique générale 1, cet ensemble d'affichage d'informations se compose pour l'essentiel d'un dispositif d'affichage d'informations 2 de type transmissif et d'un dispositif de rétroéclairage 4 à l'intérieur duquel est injectée la lumière produite par une ou plusieurs sources lumineuses 6. Le dispositif de rétroéclairage 4, entouré de couches d'air 8, est disposé à distance sous le dispositif d'affichage d'informations 2, dans l'ordre d'empilement de ces deux dispositifs 2 et 4. Le montage est complété par un film réfléchissant 10 disposé sous le dispositif de rétroéclairage 4, à distance de ce dernier, et par un film diffusant 12 disposé entre le dispositif de rétroéclairage 4 et le dispositif d'affichage d'informations 2, à distance de ces derniers. Le film réfléchissant 10 a pour but de réfléchir en direction du dispositif de rétroéclairage 4 la lumière qui s'échappe de celui-ci vers le bas, tandis que le film diffusant 12 a pour but d'homogénéiser la lumière qui sort du dispositif de rétroéclairage 4, en atténuant la luminosité des extracteurs de lumière 14. Les extracteurs de lumière 14 tels que des prismes ou des lentilles sont structurés par exemple dans la surface supérieure du dispositif de rétroéclairage 4. Une partie de la lumière représentée par la flèche A sur le dessin se propage par réflexion totale sur les parois internes du dispositif de rétroéclairage 4, tandis qu'une autre partie de la lumière matérialisée par la flèche B est extraite du dispositif de rétroéclairage 4 par les extracteurs de lumière 14 et dirigée vers le dispositif d'affichage d'informations 2 pour éclairer ce dernier. Comme on le voit à l'examen de la figure 1, le dispositif de rétroéclairage 4 est placé dans l'air, ceci afin de ne pas perturber le mécanisme de propagation de la lumière dans ce dispositif de rétroéclairage 4. L'ensemble d'affichage d'informations 1 résultant se compose cependant d'une pluralité d'éléments séparés les uns des autres par des couches d'air nécessaires pour éviter les pertes optiques et permettre une illumination homogène du dispositif d'affichage d'informations 2. L'ensemble d'affichage d'informations 1 est donc encombrant et difficile à intégrer dans une chaîne de production industrielle automatisée. Par ailleurs, lorsque l'ensemble d'affichage d'informations 1 est logé par exemple dans un boîtier, toute modification de la géométrie du boîtier peut nécessiter de reprendre le moule d'injection du dispositif de rétroéclairage, voire de devoir en produire un nouveau, ce qui est coûteux.

La figure 2 est une vue schématique d'un ensemble d'affichage d'informations selon l'invention. Désigné dans son ensemble par la référence numérique générale 16, cet ensemble d'affichage comprend un dispositif de rétroéclairage 18 qui peut être du même type que celui décrit en liaison avec la figure 1 et qui est disposé sous un dispositif d'affichage d'informations 20 de type transmissif qui, lui aussi, peut être du même type que celui décrit ci-dessus. Les extracteurs de lumière 22 tels que des prismes ou des lentilles sont structurés dans la surface supérieure 24 du dispositif de rétroéclairage 18. Une partie de la lumière représentée par la flèche A sur le dessin se propage par réflexion totale sur les parois internes du dispositif de rétroéclairage 18, tandis qu'une autre partie de la lumière matérialisée par la flèche B est extraite du dispositif de rétroéclairage 18 par les extracteurs de lumière 22 et dirigée vers le dispositif d'affichage d'informations 20 pour éclairer ce dernier. On comprend donc immédiatement que l'un des avantages de la présente invention est qu'elle ne nécessite pas ou peu de modifications des différents éléments qui composent un ensemble d'affichage d'informations conventionnel. Par suite, la différence avec l'art antérieur réside notamment dans le fait que le dispositif de rétroéclairage 18 est revêtu, sur sa surface supérieure 24 dans laquelle sont structurés les extracteurs de lumière 22, d'une première couche poreuse 26 qui joue le rôle d'interface optique et mécanique pour la fixation du dispositif de rétroéclairage 18 au dispositif d'affichage d'informations 20. On a en effet observé que le dépôt de la couche poreuse sur la surface supérieure du dispositif de rétroéclairage dans laquelle sont structurés les extracteurs de lumière n'altère que faiblement les propriétés optiques de ces extracteurs. Les extracteurs de lumière, recouverts par la couche poreuse, voient en effet leur efficacité d'extraction diminuer légèrement en raison d'une différence plus faible entre l'indice de réfraction de la matière du guide et l'indice de réfraction de la couche poreuse. Cette baisse d'efficacité peut toutefois être évaluée et être prise en compte lors de la conception du système et de la détermination de son bilan énergétique. Pour pallier la diminution d'efficacité, on peut en particulier agir sur la géométrie des extracteurs. En outre, la baisse d'efficacité peut, dans certains cas, être naturellement compensée par un meilleur flux de lumière à travers la structure lorsqu'on assemble un dispositif monobloc. En effet, dans les systèmes de l'art antérieur, la présence des couches d'air augmente fortement les réflexions multiples qui se produisent lorsque la lumière se propage aux interfaces entre l'air et le guide de lumière. Pour remédier à ce problème, on est souvent obligé d'avoir recours à des films par exemple prismatiques afin de pouvoir recycler la lumière réfléchie aux diverses interfaces. On jouit donc d'une totale liberté pour ce qui est du choix de la surface du dispositif de rétroéclairage sur laquelle est déposée la couche poreuse, ce qui procure une grande flexibilité dans la conception de l'ensemble d'affichage d'informations selon l'invention. Par ailleurs, la couche poreuse a pour avantage que son indice de réfraction, supérieur à celui de l'air, est cependant sensiblement inférieur aux indices de réfraction des matériaux que l'on trouve dans la nature et qui ne sont jamais inférieurs à 1.3. Par conséquent, le fait que la première couche poreuse 26 soit déposée sur la surface supérieure 24 du dispositif de rétroéclairage 18 ne modifie pratiquement pas les mécanismes de propagation de la lumière à l'intérieur du dispositif de rétroéclairage 18. La seule différence que l'on observe est que l'ouverture numérique du dispositif de rétroéclairage 18 devient plus petite, de sorte que la propagation de la lumière se fait selon des angles plus rasants. En conséquence, comme l'ouverture numérique du dispositif de rétroéclairage 18 devient, pour une source de lumière donnée, plus petite, la quantité de lumière qu'il est possible d'injecter dans le dispositif de rétroéclairage 18 est un peu plus faible. Ainsi, si l'on est prêt à accepter les légères pertes de flux lumineux qu'induit l'utilisation de la première couche poreuse 26, on peut alors profiter de l'interface mécanique que procure une telle couche poreuse 26 pour assembler le dispositif de rétroéclairage 18 avec le dispositif d'affichage d'informations 20 au moyen d'un film adhésif 28 optiquement transparent du type Optical Clear Adhesive ou OCA. Grâce à ces caractéristiques, on obtient un ensemble d'affichage d'informations monobloc plus facile à intégrer dans une ligne de production industrielle automatisée que des éléments séparés. L'ensemble d'affichage d'informations est également moins volumineux et occupe donc moins de place par exemple dans un boîtier dans lequel il est logé. Enfin, si le boîtier est modifié, il ne sera normalement pas nécessaire de retoucher ou de réaliser un nouveau moule d'injection du dispositif de rétroéclairage.

La figure 3 est une vue analogue à celle de la figure 2 à la différence près que l'ensemble d'affichage d'informations 16 est complété par un film réfléchissant 30 et par un film diffusant 32. Plus précisément, le film réfléchissant 30 est disposé sous le dispositif de rétroéclairage 18 avec interposition, entre le film réfléchissant 30 et le dispositif de rétroéclairage 18, d'un premier film adhésif 34 et d'une seconde couche poreuse 36 déposée sur la surface inférieure 38 du dispositif de rétroéclairage 18. Le film diffusant 32 est disposé au-dessus du dispositif de rétroéclairage 18, avec interposition de la première couche poreuse 26 et d'un deuxième film adhésif 40 entre le dispositif de rétroéclairage 18 et le film diffusant 32. Le film réfléchissant 30 a pour fonction de réfléchir en direction du dispositif d'affichage d'informations 20 la lumière extraite du dispositif de rétroéclairage 18 par les extracteurs 22. Quant au film diffusant 32, il a pour but d'homogénéiser la lumière qui sort du dispositif de rétroéclairage 18 en réduisant la visibilité de la matrice d'extracteurs de lumière 14. On voit donc que l'on peut utiliser les couches poreuses 26 et 36 comme interfaces mécaniques et optiques permettant la fixation des films réfléchissant 30 et diffusant 32 sur le dispositif de rétroéclairage 18 au moyen d'une couche adhésive 34, respectivement 40, le film diffusant 32 étant à son tour utilisé comme interface mécanique et optique pour la fixation du dispositif de rétroéclairage 18 sur le dispositif d'affichage d'informations 20 au moyen d'une troisième couche adhésive 42. Cette troisième couche adhésive 42 peut être, par exemple, une couche de colle optique transparente. Selon une autre variante, le film diffusant 32 est revêtu d'origine d'une couche adhésive.

Jusqu'à présent, on a décrit l'invention en liaison avec un dispositif de rétroéclairage dont les extracteurs de lumière sont ménagés dans la surface supérieure. Il va cependant de soi que la présente invention peut être appliquée de manière similaire à un dispositif de rétroéclairage dont les extracteurs de lumière sont structurés dans la surface inférieure comme cela va être expliqué en référence à la figure 4 sur laquelle est représenté un ensemble d'affichage d'informations selon l'invention. Désigné dans son ensemble par la référence numérique générale 44, cet ensemble d'affichage comprend un dispositif de rétroéclairage 18 qui peut être du même type que celui décrit en liaison avec les figures 2 et 3 et qui est disposé sous un dispositif d'affichage d'informations 20 de type transmissif qui, lui aussi, peut être du même type que celui décrit ci-dessus. Les extracteurs de lumière 22 tels que des prismes ou des lentilles sont structurés dans la surface inférieure 38 du dispositif de rétroéclairage 18. Une partie de la lumière représentée par la flèche A sur le dessin se propage par réflexion totale sur les parois internes du dispositif de rétroéclairage 18, tandis qu'une autre partie de la lumière matérialisée par la flèche B est extraite du dispositif de rétroéclairage 18 par les extracteurs de lumière 22 et dirigée vers le dispositif d'affichage d'informations 20 pour éclairer ce dernier.

L'ensemble d'affichage d'informations 44 est complété par un film réfléchissant 30 et par un film diffusant 32. Plus précisément, le film réfléchissant 30 est disposé sous le dispositif de rétroéclairage 18 avec interposition d'un premier film adhésif 34 et d'une seconde couche poreuse 36 entre le film réfléchissant 30 et le dispositif de rétroéclairage 18, tandis que le film diffusant 32 est disposé au-dessus du dispositif de rétroéclairage 18, avec interposition de la première couche poreuse 26 et d'un deuxième film adhésif 40 entre le dispositif de rétroéclairage 18 et le film diffusant 32. Le film réfléchissant 30 a pour fonction de réfléchir en direction du dispositif d'affichage d'informations 20 la lumière extraite du dispositif de rétroéclairage 18 par les extracteurs 22. Quant au film diffusant 32, il a pour but d'homogénéiser la lumière qui sort du dispositif de rétroéclairage 18 en réduisant la visibilité de la matrice d'extracteurs de lumière 22. On voit donc que l'on peut utiliser les couches poreuses 26 et 36 comme interfaces mécaniques et optiques permettant la fixation des films réfléchissant 30 et diffusant 32 sur le dispositif de rétroéclairage 18 au moyen d'une couche adhésive 34, respectivement 40, le film diffusant 32 étant à son tour utilisé comme interface mécanique et optique pour la fixation du dispositif de rétroéclairage 18 sur le dispositif d'affichage d'informations 20 au moyen d'une troisième couche adhésive 42. Cette troisième couche adhésive 42 peut être, par exemple, une couche de colle optique transparente. Selon une autre variante, le film diffusant 32 est revêtu d'origine d'une couche adhésive.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées à la présente demande de brevet. En particulier, un exemple d'un matériau poreux bien adapté pour les besoins de la présente invention est décrit dans l'article intitulé « Nanoporous films with low refractive index for large-surface broad-band anti-reflection coatings » paru dans la revue Macromolecular materials and engineering Volume 295, Edition No. 7 du 12 juillet 2010, pages 628-636. Cet article est incorporé par référence dans la présente demande de brevet. Un procédé industriel en phase aqueuse a pour point de départ des suspensions polymériques de nanoparticules inorganiques. Une fois déposée sur un substrat, la solution est séchée et l'on obtient une couche hybride de morphologie poreuse dans laquelle des pores d'air de dimensions nanométriques apparaissent entre des agglomérats de nanoparticules de quelques centaines de nanomètres avec le polymère qui joue le rôle de simple liant. En contrôlant de manière appropriée la surface des nanoparticules, la composition de la solution ou le procédé de fabrication et, en particulier, en faisant varier la nature des nanoparticules, par exemple en choisissant le dioxyde de silicium ($SiO_2$), l'oxyde d'aluminium/hydroxyde (AlOOH), ou le dioxyde de titane ($TiO_2$), on obtient des couches poreuses avec un indice de réfraction moyen n qui peut varier entre de très faibles valeurs (n<1.2) et des valeurs faibles (1.2<n<1.0) dans le domaine du spectre visible. Toutes les couches poreuses sont déposées sur des substrats transparents épais (environ 175 micromètres) réalisés en poly(éthylène téréphtalate) ou PET recouverts sur les deux faces d'une couche d'adhésion de 100 nanomètres. Cette couche d'adhésion est formée par un revêtement non-poreux obtenu par mélange de différents polymères qui permet l'adhésion sur le substrat en PET de

## Revendications

1. Ensemble d'affichage d'informations (16) comprenant un dispositif d'affichage d'informations (20) de type transmissif et un dispositif de rétroéclairage (18) dans lequel est injectée de la lumière, le dispositif de rétroéclairage (18), disposé sous le dispositif d'affichage d'informations (20) par rapport à un observateur, présentant une surface supérieure (24) en regard du dispositif d'affichage d'informations (20) et une surface inférieure (38) opposée à la surface supérieure (24), des extracteurs de lumière (22), structurés dans la surface supérieure (24) du dispositif de rétroéclairage (18), permettant d'extraire une partie de la lumière injectée dans le dispositif de rétroéclairage (18) et de la diriger en direction du dispositif d'affichage d'informations (20) pour éclairer ce dernier, une première couche poreuse (26) étant déposée sur la surface supérieure (24) dans laquelle sont structurés les extracteurs de lumière (22).

2. Ensemble d'affichage d'informations selon la revendication 1, **caractérisé en ce qu'**une seconde couche poreuse (36) est déposée sur la surface inférieure (38) du dispositif de rétroéclairage (18) dépourvue d'extracteurs de lumière.

3. Ensemble d'affichage d'informations selon l'une quelconque des revendications 1 ou 2, **caractérisé en ce que** le dispositif de rétroéclairage (18) est disposé sous le dispositif d'affichage d'informations (20) avec interposition d'une couche adhésive (28) entre la première couche poreuse (26) et le dispositif d'affichage d'informations (20).

4. Ensemble d'affichage d'informations selon l'une quelconque des revendications 2 ou 3, **caractérisé en ce qu'**un film réfléchissant (30) est fixé sous la surface inférieure (38) du dispositif de rétroéclairage (18), via la seconde couche poreuse (36).

5. Ensemble d'affichage d'informations selon la revendication 4, **caractérisé en ce que** le film réfléchissant (30) est fixé sous le dispositif de rétroéclairage (18), via la seconde couche poreuse (36), au moyen d'une couche adhésive (34).

6. Ensemble d'affichage d'informations selon l'une quelconque des revendications 1 à 5, **caractérisé en ce qu'**un film diffusant (32) est fixé sur la surface supérieure (24) du dispositif de rétroéclairage (18), via la première couche poreuse (26).

7. Ensemble d'affichage d'informations selon la revendication 6, **caractérisé en ce que** le film diffusant (32) est fixé sur le dispositif de rétroéclairage (18), via la première couche poreuse (26), au moyen d'une couche adhésive (40).

8. Ensemble d'affichage d'informations (44) comprenant un dispositif d'affichage d'informations (20) de type transmissif et un dispositif de rétroéclairage (18) dans lequel est injectée de la lumière, le dispositif de rétroéclairage (18), disposé sous le dispositif d'affichage d'informations (20) par rapport à un observateur, présentant une surface supérieure (24) en regard du dispositif d'affichage d'informations (20) et une surface inférieure (38) opposée à la surface supérieure (24), des extracteurs de lumière (22), structurés dans la surface inférieure (38) du dispositif de rétroéclairage (18), permettant d'extraire une partie de la lumière injectée dans le dispositif de rétroéclairage (18) et de la diriger en direction du dispositif d'affichage d'informations (20) pour éclairer ce dernier, une première couche poreuse (26) étant déposée sur la surface inférieure (38) dans laquelle sont structurés les extracteurs de lumière (22).

9. Ensemble d'affichage d'informations selon la revendication 8, **caractérisé en ce qu'**une seconde couche poreuse (36) est déposée sur la surface supérieure (24) du dispositif d'affichage d'informations (16) dépourvue d'extracteurs de lumière.

10. Ensemble d'affichage d'informations selon la revendication 9, **caractérisé en ce que** le dispositif de rétroéclairage (18) est disposé sous le dispositif d'affichage d'informations (20) avec interposition d'une couche adhésive (28) entre la seconde couche poreuse (36) et le dispositif d'affichage d'informations (20).

11. Ensemble d'affichage d'informations selon l'une quelconque des revendications 8 à 10, **caractérisé en ce qu'**un film réfléchissant (30) est fixé sous la surface inférieure (38) du dispositif de rétroéclairage (18), via la première couche poreuse (26).

12. Ensemble d'affichage d'informations selon la revendication 11, **caractérisé en ce que** le film réfléchissant (30) est fixé sous le dispositif de rétroéclairage (18), via la première couche poreuse (26), au moyen d'une couche adhésive (34).

13. Ensemble d'affichage d'informations selon l'une quelconque des revendications 9 à 12, **caractérisé en ce qu'**un film diffusant (32) est fixé sur la surface supérieure (24) du dispositif de rétroéclairage (18), via la seconde couche poreuse (36).

14. Ensemble d'affichage d'informations selon la revendication 13, **caractérisé en ce que** le film diffusant (32) est fixé sur le dispositif de rétroéclairage (18), via la seconde couche poreuse (36), au moyen d'une couche adhésive (40).

15. Ensemble d'affichage d'informations selon l'une quelconque des revendications 1 à 14, **caractérisé en ce que** la dimension des cavités des couches poreuses (26, 36) est inférieure à la longueur d'onde de la lumière qui traverse les couches poreuses.

16. Ensemble d'affichage d'informations selon l'une quelconque des revendications 1 à 15, **caractérisé en ce que** l'épaisseur des couches poreuses (26, 36) est inférieure ou égale à six micromètres.

17. Ensemble d'affichage selon l'une quelconque des revendications précédentes, **caractérisé en ce que** les couches adhésives sont formées par un film optique adhésif, ou bien par une colle transparente photo- ou thermo-polymérisable

**Patentansprüche**

1. Anordnung (16) für die Anzeige von Daten, die eine Datenanzeigevorrichtung (20) des Transmissionstyps und eine Rückbeleuchtungs-vorrichtung (18), in die Licht eingeleitet wird, umfasst, wobei die Rückbeleuchtungsvorrichtung (18), die in Bezug auf einen Beobachter unter der Datenanzeigevorrichtung (20) angeordnet ist, eine obere Oberfläche (24) gegenüber der Datenanzeigevorrichtung (20) und eine untere Oberfläche (38) gegenüber der oberen Oberfläche (24) aufweist, wobei Lichtauskoppler (22), die in der oberen Oberfläche (24) der Rückbeleuchtungsvorrichtung (18) strukturiert sind, ermöglichen, einen Teil des in die Rückbeleuchtungsvorrichtung (18) eingeleiteten Lichts auszukoppeln und es in Richtung der Datenanzeige-vorrichtung (20) zu lenken, um diese Letztere zu beleuchten, wobei eine erste poröse Schicht (26) direkt auf der oberen Oberfläche (24), in der die Lichtauskoppler (22) strukturiert sind, aufgebracht ist.

2. Datenanzeigeanordnung nach Anspruch 1, **dadurch gekennzeichnet, dass** eine zweite poröse Schicht (36) auf der unteren Oberfläche (38) der Rückbeleuchtungsvorrichtung (18), die keine Lichtauskoppler aufweist, aufgebracht ist.

**3.** Datenanzeigeanordnung nach einem der Ansprüche 1 oder 2, **dadurch gekennzeichnet, dass** die Rückbeleuchtungs-vorrichtung (18) unter der Datenanzeigevorrichtung (20) unter Einfügung einer Klebstoffschicht (28) zwischen der ersten porösen Schicht (26) und der Datenanzeigevorrichtung (20) angeordnet ist.

**4.** Datenanzeigeanordnung nach einem der Ansprüche 2 oder 3, **dadurch gekennzeichnet, dass** unter der unteren Oberfläche (38) der Rückbeleuchtungsvorrichtung (18) ein reflektierender Film (30) über die zweite poröse Schicht (36) befestigt ist.

**5.** Datenanzeigeanordnung nach Anspruch 4, **dadurch gekennzeichnet, dass** der reflektierende Film (30) unter der Rückbeleuchtungsvorrichtung (18) über die zweite poröse Schicht (36) mittels einer Klebstoffschicht (34) befestigt ist.

**6.** Datenanzeigeanordnung nach einem der Ansprüche 1 bis 5, **dadurch gekennzeichnet, dass** auf der oberen Oberfläche (24) der Rückbeleuchtungs-vorrichtung (18) über die erste poröse Schicht (26) ein Diffusionsfilm (32) befestigt ist.

**7.** Datenanzeigeanordnung nach Anspruch 6, **dadurch gekennzeichnet, dass** der Diffusionsfilm (32) auf der Rückbeleuchtungsvorrichtung (18) über die erste poröse Schicht (26) mittels einer Klebstoffschicht (40) befestigt ist.

**8.** Datenanzeigeanordnung (44), die eine Datenanzeigevorrichtung (20) des Transmissionstyps und eine Rückbeleuchtungsvorrichtung (18), in die Licht eingeleitet wird, umfasst, wobei die Rückbeleuchtungsvorrichtung (18), die in Bezug auf einen Beobachter unter der Datenanzeigevorrichtung (20) angeordnet ist, eine obere Oberfläche (24) gegenüber der Datenanzeigevorrichtung (20) und eine untere Oberfläche (38) gegenüber der oberen Oberfläche (24) aufweist, wobei Lichtauskoppler (22), die in der unteren Oberfläche (38) der Rückbeleuchtungsvorrichtung (18) strukturiert sind, ermöglichen, einen Teil des in der Rückbeleuchtungsvorrichtung (18) eingeleiteten Lichts auszukoppeln und es in Richtung der Datenanzeigevorrichtung (20) zu lenken, um diese Letztere zu beleuchten, wobei eine erste poröse Schicht (26) direkt auf der unteren Oberfläche (38), in der die Lichtauskoppler (22) strukturiert sind, abgelagert ist.

**9.** Datenanzeigeanordnung nach Anspruch 8, **dadurch gekennzeichnet, dass** auf der oberen Oberfläche (24) der Datenanzeigevorrichtung (16), in der keine Lichtauskoppler vorhanden sind, eine zweite poröse Schicht (36) abgelagert ist.

**10.** Datenanzeigeanordnung nach Anspruch 9, **dadurch gekennzeichnet, dass** die Rückbeleuchtungsvorrichtung (18) unter der Datenanzeigevorrichtung (20) unter Einfügung einer Klebstoffschicht (28) zwischen der zweiten porösen Schicht (36) und der Datenanzeigevorrichtung (20) angeordnet ist.

**11.** Datenanzeigeanordnung nach einem der Ansprüche 8 bis 10, **dadurch gekennzeichnet, dass** unter der unteren Oberfläche (38) der Rückbeleuchtungsvorrichtung (18) über die erste poröse Schicht (26) ein reflektierender Film (30) befestigt ist.

**12.** Datenanzeigeanordnung nach Anspruch 11, **dadurch gekennzeichnet, dass** der reflektierende Film (30) unter der Rückbeleuchtungsvorrichtung (18) über die erste poröse Schicht (26) mittels einer Klebstoffschicht (34) befestigt ist.

**13.** Datenanzeigeanordnung nach einem der Ansprüche 9 bis 12, **dadurch gekennzeichnet, dass** auf der oberen Oberfläche (24) der Rückbeleuchtungsvorrichtung (18) über die zweite poröse Schicht (36) ein Diffusionsfilm (32) befestigt ist.

**14.** Datenanzeigeanordnung nach Anspruch 13, **dadurch gekennzeichnet, dass** der Diffusionsfilm (32) auf der Rückbeleuchtungsvorrichtung (18) über die zweite poröse Schicht (36) mittels einer Klebstoffschicht (40) befestigt ist.

**15.** Datenanzeigeanordnung nach einem der Ansprüche 1 bis 14, **dadurch gekennzeichnet, dass** die Abmessung von Hohlräumen der porösen Schichten (26, 36) kleiner ist als die Wellenlänge des Lichts, das durch die porösen Schichten läuft.

**16.** Datenanzeigeanordnung nach einem der Ansprüche 1 bis 15, **dadurch gekennzeichnet, dass** die Dicke der porösen Schichten (26, 36) kleiner oder gleich sechs Mikrometer ist.

**17.** Anzeigeanordnung nach einem der vorhergehenden Ansprüche, **dadurch gekennzeichnet, dass** die Klebstoffschichten durch einen optischen Klebstofffilm oder durch einen lichtdurchlässigen Klebstoff, der photo- oder thermopolymerisierbar ist, gebildet sind.

**Claims**

**1.** Data display assembly (16) including a transmissive type data display device (20) and a backlight device (18) into which light is injected, the backlight device (18), disposed underneath the data display device (20) in relation to an observer, having an upper surface (24) facing the data display device (20) and a lower surface (38) opposite the upper surface (24), light extractors (22), structured in the upper surface (24) of the backlight device (18), permitting extraction of part of the light injected into the backlight device (18) and directing the light towards the data display device (20) for the illumination thereof, a first porous layer (26) being deposited directly on the upper surface (24) on which the light extractors (22) are structured.

2. Data display assembly according to claim 1, **characterized in that** a second porous layer (36) is deposited in the lower surface (38) of the backlight device (18) devoid of light extractors.

3. Data display assembly according to any of claims 1 or 2, **characterized in that** the backlight device (18) is disposed underneath the data display device (20) with the insertion of an adhesive layer (28) between the first porous layer (26) and the data display device (20).

4. Data display assembly according to any of claims 2 or 3, **characterized in that** a reflective film (30) is fixed underneath the lower surface (38) of the backlight device (18), via the second porous layer (36).

5. Data display assembly according to claim 4, **characterized in that** the reflective film (30) is fixed underneath the backlight device (18), via the second porous layer (36), by means of an adhesive layer (34).

6. Data display assembly according to any of claims 1 to 5, **characterized in that** a diffusing film (32) is fixed to the upper surface (24) of the backlight device (18), via the first porous layer (26).

7. Data display assembly according to claim 6, **characterized in that** the diffusing film (32) is fixed to the backlight device (18), via the first porous layer (26), by means of an adhesive layer (40).

8. Data display assembly (44) including a transmissive type data display device (20) and a backlight device (18) into which light is injected, the backlight device (18), disposed underneath the data display device (20) in relation to an observer, having an upper surface (24) facing the data display device (20) and a lower surface (38) opposite the upper surface (24), light extractors (22), structured in the lower surface (38) of the backlight device (18), permitting extraction of part of the light injected into the backlight device (18) and directing the light towards the data display device (20) for the illumination thereof, a first porous layer (26) being deposited directly on the lower surface (38) in which the light extractors (22) are structured.

9. Data display assembly according to claim 8, **characterized in that** a second porous layer (36) is deposited on the upper surface (24) of the data display device (20) devoid of light extractors.

10. Data display assembly according to claim 9, **characterized in that** the backlight device (18) is disposed underneath the data display device (20) with the insertion of an adhesive layer (28) between the second porous layer (36) and the data display device (20).

11. Data display assembly according to any of claims 8 to 10, **characterized in that** a reflective film (30) is fixed underneath the lower surface (38) of the backlight device (18), via the first porous layer (26).

12. Data display assembly according to claim 11, **characterized in that** the reflective film (30) is fixed underneath the backlight device (18), via the first porous layer (26), by means of an adhesive layer (34).

13. Data display assembly according to any of claims 9 to 12, **characterized in that** a diffusing film (32) is fixed to the upper surface (24) of the backlight device (18), via the second porous layer (36).

14. Data display assembly according to claim 13, **characterized in that** the diffusing film (32) is fixed to the backlight device (18), via the second porous layer (36), by means of an adhesive layer (40).

15. Data display assembly according to any of claims 1 to 14, **characterized in that** the dimension of the cavities of the porous layers (26, 36) is less than the wavelength of light which traverses the porous layers.

16. Data display assembly according to any of claims 1 to 15, **characterized in that** the thickness of the porous layers (26, 36) is less than or equal to six micrometres.

17. Display assembly according to any of the preceding claims, **characterized in that** the adhesive layers are formed by an adhesive optical film, or by a transparent photopolymerizable or thermopolymerizable adhesive.

Fig. 1

Fig. 2

EP 2 906 872 B1

Fig.3

Fig. 4

13

EP 2 906 872 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Nanoporous films with low refractive index for large-surface broad-band anti-reflection coatings. Macromolecular materials and engineering. 12 Juillet 2010, vol. 295, 628-636